# EUROPÄISCHE PATENTSCHRIFT

(11) **EP 1 062 540 B1**
(45) Veröffentlichungstag und Bekanntmachung des Hinweises auf die Patenterteilung: **28.05.2003**
(21) Anmeldenummer: 99911768.2
(22) Anmeldetag: 10.03.1999
(51) Int. Cl.: G02B 27/09

(54) **VORRICHTUNG UND VERFAHREN ZUR OPTISCHEN STRAHLTRANSFORMATION**
DEVICE AND METHOD FOR TRANSFORMING OPTICAL RAYS
DISPOSITIF ET PROCEDE DE TRANSFORMATION OPTIQUE DE RAYONS

(30) Priorität: 10.03.1998 DE 19810245; 06.05.1998 DE 19820154
(43) Veröffentlichungstag der Anmeldung: 27.12.2000
(73) Patentinhaber: Hentze-Lissotschenko Patentverwaltungs GmbH & Co.KG, 25870 Norderfriedrichskoog (DE)
(72) Erfinder: LISSOTSCHENKO, Vitalij, 44149 Dortmund (DE)
(74) Vertreter: Basfeld, Rainer, Dr. Dipl.-Phys.
(86) Internationale Anmeldenummer: EP9901569
(87) Internationale Veröffentlichungsnummer: WO99046627

(56) Entgegenhaltungen:
- WO-A-98/08128
- DE-A- 19 514 625
- DE-A- 19 544 488
- US-A- 4 475 027
- US-A- 5 390 024
- US-A- 5 572 367
- EDWIN R P: "STRIPE STACKER FOR USE WITH LASER DIODE BARS" OPTICS LETTERS, Bd. 20, Nr. 2, 15. Januar 1995 (1995-01-15), Seiten 222-224, XP002006236 ISSN: 0146-9592

## Beschreibung

Die Erfindung betrifft eine Vorrichtung zur optischen Strahltransformation mindestens eines Strahlbündels gemäß dem Oberbegriff des Anspruchs 1. Außerdem ist ein Verfahren Gegenstand der Erfindung, welches die optische Transformation des Strahlquerschnitts mindestens eines Strahlbündels betrifft, welches einen in der x-y-Ebene ausgedehnten Strahlquerschnitt hat und eine definierte Divergenzverteilung aufweist.

Eine grundlegende Problematik bei der Einkopplung von hochenergetischer Laserstrahlung in Lichtleitfasern ergibt sich daraus, dass die geometrische Form des Strahlquerschnitts in der Regel erheblich von der Form des aktiven Faserquerschnitts abweicht. So haben beispielsweise die immer weiter Verbreitung findenden Halbleiter-Laserbarren eine bandförmig-langgestreckte Lichtaustrittsfläche, also eine quasi linienförmige Apertur, bei der die einzelnen eng begrenzten Emissionszentren beispielsweise in x-Richtung nebeneinander liegen. Die Divergenz der von den Emissionszentren ausgehenden Elementarstrahlbündel ist konstant, jedoch in der Längsrichtung des Strahlprofils, also in dem eingangs eingeführten Koordinatensystem in x-Richtung, erheblich kleiner als in der senkrecht dazu stehenden y-Achse. Die Längsachse wird deswegen durchgehend als "slow-axis", die y-Achse hingegen als "fast axis" bezeichnet.

Unter den vorbeschriebenen Bedingungen ist zwar eine relativ gute Kollimation in der fast axis möglich, das Linienprofil bleibt dabei jedoch nach wie vor linienförmig-langgestreckt. Bedingt durch diese ausgeprägte Asymmetrie sowohl hinsichtlich der geometrischen Ausdehnung des Strahlquerschnitts, als auch hinsichtlich der Divergenzverteilung, lässt sich das Strahlbündel nicht auf einen symmetrischen Spot fokussieren, der zur Einkopplung in einen kreisrund-symmetrischen Faserquerschnitt geeignet wäre. Die numerische Apertur der Faser würde nämlich dabei in jedem Falle überschritten. Abgesehen davon, dass der Strahlquerschnitt im Fokus immer größer sein würde als der aktive Querschnitt des Faserkerns, würde aufgrund der hohen Divergenz der Winkel der Totalreflexion zwischen Kern und Faser überschritten, so dass Strahlung in den Mantel übertritt und entsprechende Verluste die Folge sind.

Aufgrund der vorgenannten Unterschiede zwischen der Symmetrie des Strahlquerschnitts und des Faserkerns würden zudem im Faserquerschnitt relativ große nicht ausgeleuchtete Zonen auftreten. Dies gilt im übrigen auch für die Verwendung von Laserbarren-Stapeln, sogenannten "Stacks", bei denen eine Vielzahl linienförmiger Emitter in einem Stapel übereinander angeordnet ist. Die von diesen abgegebene Strahlung ist zwar über einen größeren, meist rechteckigen Querschnitt verteilt. Zwischen den einzelnen Linien liegen jedoch jeweils emissionsfreie Zonen, was gleichbedeutend ist mit einer inhomogenen Intensitätsverteilung.

Um über eine homogene Ausleuchtung des Faserquerschnitts eine effizientere Ausnutzung und damit eine höhere übertragbare Leistung zu erreichen, sind nach dem Stand der Technikbereits unterschiedliche Lösungsansätze bekannt. Mit denbekannten Anordnungen bzw. Vorrichtungen wird ein Eingangsstrahlbündel mit einem in der x-y-Ebene ausgedehnten Strahlquerschnitt zunächst in einer Richtung, beispielsweise entlang der x-Achse, in diskrete Teilstrahlbündel zerlegt. Anschließend werden diese Teilstrahlbündel durch refraktive oder reflektive Elemente in y-Richtung umgruppiert, so dass ein gewünschter Ausgangsquerschnitt erreicht wird. So wird beispielsweise in der DE 195 14 625 C2 vorgeschlagen,linienförmige Abschnitte eines gegebenen linearen Strahlquerschnitts übereinander in einem quadratischen oder rechteckigen Bereich umzugruppieren. Durch das auf diese Weise gebildete Ausgangsstrahlbündel wird eine bessere Flächenfüllung des kreisrunden Faserquerschnitts ermöglicht, wodurch höhere Leistungen als bei einfacher Kollimierung bzw. Fokussierung übertragbar sind. Es ist jedoch offensichtlich, dass die Grenzen dieses Verfahrens bzw. der danach arbeitenden Vorrichtungen relativ schnell erreicht sind, da zwischen den umgruppierten Linienabschnitten weiterhin emissionsfreie Zonen verbleiben.

Die Apertur der Lichtleitfaser ist somit nicht gleichmäßig ausgeleuchtet. Je nach Art der Emissionsquelle kann bei hohen übertragenen Leistungen durch lokale Intensitätsüberhöhungen eine schnellere Alterung der Faser auftreten. Wenn die lokale Energiedichte die Zerstörschwelle des Fasermaterials überschreitet, kann eine Zerstörung der Faser auftreten.

Ein weiterer Nachteil ergibt sich daraus, dass bei der Zerlegung des Eingangsstrahlbündels in diskrete Teilstrahlbündel an den Trennstellen unvermeidlich Beugungseffekte auftreten, die zu Verlusten führen. Dies bezieht sich gleichermaßen auf die Verwendung von reflektiven Elementen, wie z. B. Treppenspiegeln, als auch refraktiven Elementen, wie z. B. Stufenprismen oder dergleichen. Durch diese Verluste wird natürlich der Wirkungsgrad ebenfalls verringert.

Ein anderer Ansatz wird in der DE 196 23 762 AI beschrieben. Mit Hilfe der daraus hervorgehenden Vorrichtung wird ein lineares Eingangsstrahlprofil durch Hintereinanderschaltung von drei senkrecht zueinander stehenden Zylinderlinsen in ein zirkularsymmetrisches Strahlungsfeld transformiert. Denknotwendigerweise hat bei dieser Vorrichtung der Ausgangsstrahl ein kreisringförmiges Profil. Das bedeutet, dass praktisch die gesamte Kreisinnenfläche wiederum eine Totzone darstellt, die nicht ausgeleuchtet wird. Aufgrund der daraus resultierenden Inhomogenität der Energieverteilung über einen Faserquerschnitt ist die übertragbare Leistung ebenfalls wie in den vorgenannten Vorrichtungen begrenzt.

Aus der US 5,390,024 A ist eine Vorrichtung der eingangs genannten Art bekannt. Bei der darin beschriebenen Vorrichtung wird eine epipolare Bildtransformation durchgeführt. Zu diesem Zweck umfasst die Vorrichtung zwei schmale in horizontaler Richtung ausgedehnte Schlitze, durch die das zu transformierende Licht hindurchtreten kann. In Ausbreitungsrichtung hinter diesen Schlitzen ist ein Prisma angeordnet, das auf seiner von den Schlitzen abgewandten Seite eine schraubenförmig gebundene bzw. tordierte optische Grenzfläche aufweist, die längs der Richtung der Schlitze eine kontinuierlich variierende Neigung in Strahlrichtung bezüglich einer zu der Richtung der Schlitzen senkrechten Richtung aufweist. Das aus diesem Prisma austretende Licht wird vermittels einer Linse in einer ausgangsseitigen Bildebene fokussiert.

Ausgehend von der vorangehend geschilderten Problematik liegt der vorliegenden Erfindung die Aufgabenstellung zugrunde, eine Strahltransformationsvorrichtung sowie ein Verfahren zur Strahltransformation anzugeben, welches eine definierte Intensitätsverteilung im Ausgangsstrahlbündel ermöglicht und bei dem geringere interne Verluste auftreten. Insbesondere soll die Vorrichtung und das Verfahren dazu geeignet sein, Strahlung aus einer Strahlquelle mit stark unsymmetrischem Strahlquerschnitt, beispielsweise aus einem Laser oder einem Laserbarren-Stapel, besser in eine oder mehrere Lichtleitfasern einzukoppeln.

Zur Lösung dieser Aufgabe schlägt die Erfindung Vorrichtungen gemäß den kennzeichnenden Teilen der Ansprüche 1 und 2 vor.

Bei dem erfindungsgemäßen Winkeltransformationselement handelt es sich um ein reflektives oder refraktives Bauelement, dessen optisch aktive Grenzfläche die Form einer um eine - quer zur Strahlachse verlaufenden - Achse tordierten Ebene hat. Bildlich gesehen erhält man eine solche Fläche, indem man bei einer in der x-y-Ebene liegenden Fläche beispielsweise die in x-Richtung äußeren Enden derart gegeneinander verdreht, dass die x-Achse selbst die unverdrehte, neutrale Faser bildet. Dabei besteht sowohl die Möglichkeit, über die Erstreckung des Bauelements in x-Richtung kontinuierlich ansteigende bzw. abfallende Neigungswinkel zu realisieren, oder auch abschnittsweise in unterschiedliche Richtungen variable Neigungswinkel einzustellen. Während die erstgenannte Form einer "propeller-artigen" Oberfläche ähnelt, hat die zweite Form kegelmantel-ähnliche, gewellte Abschnitte.

Das erfindungsgemäße Winkeltransformationselement kann gleichermaßen als reflektives oder refraktives Elementausgebildet sein. Das refraktive Element bildet quasi ein Prismenelement mit kontinuierlich quer zur Strahlrichtung variierendem Basiswinkel. Durch einen wellenförmigen Verlauf des Neigungswinkels ist es beispielsweise entsprechend Anspruch 2 möglich, den Höhenschlag bei Laserdiodenbarren zu kompensieren. Dabei handelt es sich um Abweichungen des Emitters orthogonal zur Ausdehnungsrichtung, die auch als "Smile"-Verzerrung bezeichnet werden.

Diese Verzerrung tritt durch die Verbiegung des Halbleiterchips bei der Fertigung auf. Dadurch erhält die Lichtaustrittsfläche und damit der Strahlquerschnitt einen gebogenen Verlauf. Wird nun der Verlauf des Neigungswinkels des Winkeltransformationselements jeweils auf die lokale Abweichung des Strahlprofils von einer Geraden abgestimmt, erreicht man eine Kompensation der Verzerrung. Diese Anpassung sieht vor, dass der lokale Neigungswinkel für eine gegebene x-Koordinate jeweils abhängig ist von der lokalen Abweichung Δy der Strahlquelle vom linearen Verlauf. Dadurch erhält man ausgangsseitig in vorgegebenen Abstand ein definiertes, lineares Strahlprofil.

Die Funktion des erfindungsgemäßen Winkeltransformationselements lässt sich besonders gut anhand der Vorstellung erläutern, dass ein sich in z-Richtung ausbreitendes Strahlbündel mit in der x-y-Ebene ausgedehntem Strahlquerschnitt aus einer unendlichen Zahl von Elementarstrahlen mit infinitesimalem Querschnitt gebildet wird, die von in der x-y-Ebene liegenden Elementarpunkten ausgehen. Durch das erfindungsgemäße Winkeltransformationselement werden die Elementarstrahlbündel in Abhängigkeit von ihrer x-Koordinate in der y-z-Ebene relativ zur Strahlachse ausgelenkt. Die dadurch erreichte Transformation einer linearen Strahlkoordinate in ein Winkelkoordinate ist kontinuierlich, das heißt folgt einer stetigen Funktion. Gegenüber einer diskontinuierlichen Auftrennung in separate Teilstrahlbündel hat dies den Vorteil, dass keine Verluste durch Kantenstreuung oder dergleichen an unstetigen Übergängen auftreten. Das kontinuierlich winkeltransformierte Strahlbündel ist einer weiteren kontinuierlichen Verarbeitung zugänglich.

Die Erfindung sieht gemäß Anspruch 1 eine Anordnung vor, bei der im Strahlengang aufeinanderfolgend
- ein erstes Winkeltransformationselement mit mindestens einer optischen Grenzfläche, welche längs der x-Achse eine kontinuierlich variierende Neigung in Strahlrichtung bezüglich der y-Achse hat,
- eine Fourier-Transformationsanordnung und
- ein zweites Winkeltransformationselement mit mindestens einer optisch aktiven Grenzfläche, welche längs der y-Achse eine kontinuierlich variierende Neigung in Strahlrichtung bezüglich der x-Achse hat,
angeordnet sind, wobei das erste und zweite Winkeltransformationselement in der Brennebene und der rückwärtigen Brennebene der Fourier-Transformationsanordnung angeordnet sind.

Bei der Fourier-Transformationsanordnung handelt es sich um eine sogenannte 1 *f-1 *f-Anordnung. Dabei befindet sich das Objekt vor der Linse im Brennpunkt; die Fouriertransformierte des Objekts liegt im rückwärtigen Brennpunkt hinter der Linse. Diese Anordnung bewirkt eine Transformation einer gegebenen Divergenz in eine Fläche.

Mit dieser erfindungsgemäßen Transformationsvorrichtung läßt sich ein in der x-y-Ebene ausgedehntes Strahlbündel, welches einen insbesondere in x-Richtung ausgedehnten Strahlquerschnitt hat und eine definierte Divergenzverteilung aufweist, dadurch transformieren,
- daß in x-Richtung benachbarte Elementarstrahlen unter Beibehaltung ihrer jeweiligen Divergenz um einen kontinuierlich mit der x-Koordinate variierenden Strahlwinkel in y-Richtung relativ zur Strahlachse abgelenkt werden,
- daß durch eine kontinuierliche Fouriertransformation die Elementarstrahlen in Abhängigkeit von ihrer jeweiligen Divergenz in eine y-Koordinate transformiert werden, und
- daß die in Abhängigkeit von der y-Koordinate in ihrer Divergenz kontinuierlich variierenden Elementarstrahlen bezüglich der Strahlachse parallelisiert werden.

Die erfindungsgemäße Transformation eines Strahlbündels mit in der x-y-Ebene ausgedehntem Strahlquerschnitt, beispielsweise bei Lasern mit einem linienförmigen, in x-Richtung ausgedehnten Strahlquerschnitt, sieht vor, daß die im Strahlquerschnitt aufeinanderfolgenden infinitesimalen Elementarstrahlbündel jeweils relativ zueinander um einen kontinuierlich von deren x-Koordinate abhängenden Strahlwinkel abgelenkt werden. Indem das erste Winkeltransformationselement in der Brennweite einer Fourier-Transformationsanordnung positioniert wird, beispielsweise einer einfachen Sammellinse, eines Sammellinsen-Arrays oder auch eines gekreuzten Zylinderlinsen-Arrays, wird durch die kontinuierliche Fourier-Transforrnation im rückwärtigen Brennpunkt ein Ausgangsstrahlbündel erzeugt, welches einen in y-Richtung kontinuierlich variierenden Divergenzwinkel hat. Durch das dort angeordnete zweite Winkeltransformationselement wird diese räumliche Divergenzverteilung kompensiert. Damit ist das austretende Strahlbündel zur Strahlachse nahezu parallel.

Ein wesentlicher Vorteil der erfindungsgemäßen Vorrichtung bzw. des damit umgesetzten Verfahrens besteht darin, daß die Intensitätsverteilung im Ausgangsstrahlbündel definiert eingestellt werden kann. So ist eine Strahlquelle mit stark unsymmetrischem Seitenverhältnis des Querschnitts, beispielsweise mit linienförmigem Strahlprofil, in einen Ausgangsstrahlquerschnitt mit einem gleichmäßigerem Seitenverhältnis und einer homogenen Intensitätsverteilung transformierbar. Bei einer Quelle mit optischer Symmetrie, bei der das Produkt aus der Größe der ausgedehnten Quelle und der numerischen Apertur konstant ist, erhält man einen rechteckigen Ausgangsstrahlquerschnitt. Dessen Breite in x-Richtung ist abhängig von der Brennweite der Fourier-Transformationsanordnung und der numerischen Apertur der Quelle in x-Richtung. Dessen y-Abmessung ist abhängig vom Produkt der Divergenz in x-Richtung und der Brennweite der Fourier-Transformationsanordnung. Somit ist es beispielsweise möglich, eine Quelle mit linienförmigem, unsymmetrischem Strahlquerschnitt in einen nahezu rechteckigen Ausgangsquerschnitt mit symmetrischem Seitenverhältnis zu transformieren. Dieser ist zur Einkopplung in eine Lichtleitfaser, die ebenfalls einen symmetrischen Querschnitt hat, besonders gut geeignet.

Aufgrund der Eigenschaften der Fourier-Transformation läßt sich ein Stack, das heißt ein Stapel aus mehreren parallel angeordneten linienförmigen Quellen ebenfalls in einen Ausgangsquerschnitt mit homogener Intensitätsverteilung transformieren. Gegenüber einer einzelnen Linie wird dessen Symmetrie, das heißt das Seitenverhältnis lediglich geringfügig verändert. Damit läßt sich eine erfindungsgemäße Transformationseinrichtung sowohl für einen einzigen Laserbarren als auch für einen Laserdioden-Stack verwenden, ohne daß der Flächenfüllungsgrad bei der Einkopplung in eine Lichtleitfaser wesentlich verringert wird.

Die Erfindung ermöglicht erstmals eine definierte Vorgabe der Intensitätsverteilung im Ausgangsstrahlquerschnitt. Damit lassen sich sowohl, wie vorangehend beschrieben, ein einziges oder mehrere Eingangsstrahlbündel in einen einzigen oder auch mehrere homogen ausgeleuchtete Ausgangsstrahlen transformieren. Durch eine entsprechende Ausgestaltung der Winkeltransformationselemente mit einem nichtlinearen Verlauf des Neigungswinkels, können auch definiert inhomogene Intensitäten im Ausgangsstrahlbündel vorgegeben werden. Damit lassen sich definierte Intensitätsverteilungen vorgeben, wie sie beispielsweise für bestimmte Oberflächenbearbeitungsmethoden erwünscht sind.

Zweckmäßigerweise sind die erfindungsgemäßen Winkeltransformationselemente als einstückige refraktive Elemente ausgebildet, die beispielsweise durch Mikro-Schwingläppen aus Quarz herstellbar sind. Im Hinblick auf die Minimierung von zusätzlichen Winkelfehlern, die sich bei zunehmender Neigung quer zu dieser als unerwünschte Zusatzwinkel bemerkbar machen, kann ein einziges Winkeltransformationselement als Array von nebeneinander angeordneten Teil-Winkeltransformationselementen ausgebildet sein. Diese weisen im wesentlichen dieselbe Form auf. Durch eine in x-Richtung hinreichend kleine Apertur läßt sich der unerwünschte Zusatzwinkel jedoch immer klein im Verhältnis zum eigentlichen Neigungs- bzw. Ablenkungswinkel halten.

Alternativ kann das Winkeltransformationselement als Spiegelelement mit reflektiven Grenzflächen ausgebildet sein.

Zur optimalen Anpassung an die jeweiligen Gegebenheiten des Strahlbündel-Querschnitts können in einem Winkeltransformationselement-Array die einzelnen Teil-Winkeltransformationselemente relativ zueinander einen unterschiedlichen Neigungsverlauf aufweisen.

Die Transformationslinsen-Anordnung kann gleichfalls konventionelle Sammellinsen, wie auch gekreuzte Zylinderlinsen oder Sammellinsen- oder Zylinderlinsen-Arrays aufweisen. Unter anderem bietet sich dadurch die Möglichkeit, ein oder mehrere Eingangsstrahlbündel in ein oder mehrere Ausgangsstrahlbündel zu transformieren. Gegebenenfalls können die Zylinderlinsen-Arrays auch unterschiedlich breite Zylinderlinsen enthalten.

Mit der erfindungsgemäßen Transformationseinrichtung lassen sich beliebige ausgedehnte Strahlbündel transformieren. Beispielsweise sind alle Arten von Laseranordungen als Strahlquellen geeignet. Aufgrund der Strahlgeometrie ist ein Einsatz bei Excimer-Lasern und Halbleiter-Laserbarren bzw. Laserdioden-Stacks besonders vorteilhaft. Gegebenenfalls sind diese Laser mit vorgesetzten Kollimatoren aus gekreuzten Zylinderlinsen bzw. Zylinderlinsen-Arrays versehen.

Indem mehrere erfindungsgemäße Winkeltransformationselemente und/oder Linsenarrays eingesetzt werden, lassen sich entsprechend viele Ausgangsstrahlbündel erzeugen.

Es ist weiterhin besonders vorteilhaft, wenn die Strahltransformationsvorrichtung als optischer Hybridchip ausgebildet ist, bei dem die optischen Elemente auf einer einstückigen Grundplatte unlösbar lagefixiert sind. In die Grundplatte, die beispielsweise aus Quarz besteht, sind dabei Halterungen zur Aufnahme der optischen Elemente maßhaltig eingeformt. Die ganze Vorrichtung ist dann in einer Einheit zusammengefaßt, bei der die einzelnen Bauteile hochpräzise relativ zueinander lagefixiert sind.

Die Erfindung wird im folgenden anhand der Zeichnung näher erläutert. Es zeigen im einzelnen:
- Figur 1: ein erfindungsgemäßes Winkeltransformationselement in perspektivischer Darstellung;
- Figur 2: ein erfindungsgemäßes Winkeltransformationselement-Array in perspektivischer Darstellung;
- Figur 3: eine erfindungsgemäße Strahltransformationsvorrichtung in schematischer Darstellung;
- Figur 4: eine schematische Darstellung des ersten Winkeltransformationselements der Strahltransformationsvorrichtung gemäß Figur 3;
- Figur 5: eine schematische Darstellung des zweiten Winkeltransformationselements der Strahltransformationsvorrichtung gemäß Figur 3.

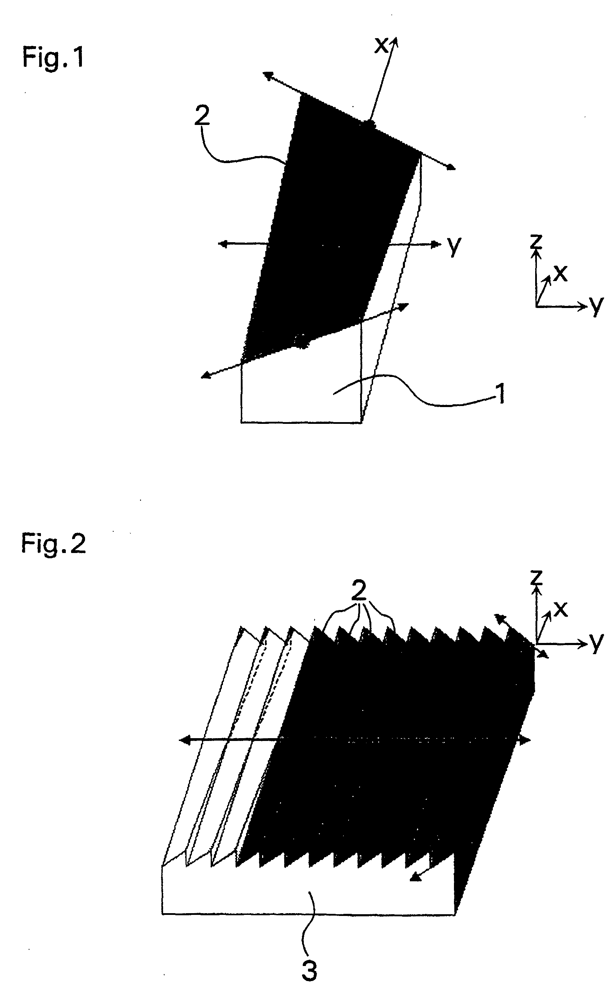

In Figur 1 ist das dargestellte erfindungsgemäße Winkeltransformationselement als ganzes mit dem Bezugszeichen 1 versehen. Es ist bevorzugt als refraktives Element ausgebildet, welches beispielsweise aus Quarz oder Glas besteht. In der vorliegenden Darstellung liegt die erfindungsgemäß ausgestaltete optisch aktive Grenzfläche - in z-Richtung - oben und ist selbst mit dem Bezugszeichen 2 bezeichnet.

Die optische aktive Grenzfläche 2 hat die Form eines sich in x-Richtung erstreckenden Bandes, welches um die x-Achse verdreht ist. Dadurch ergibt sich eine längs der x-Achse kontinuierlich variierende Neigung der lokalen Flächennormalen in Strahlrichtung bezüglich der y-Achse. Man könnte auch vereinfacht sagen, daß die optische Grenzfläche 2 "propeller-ähnlich" verdreht ist.

Die Strahlrichtung ist in dieser Darstellung entlang der z-Achse.

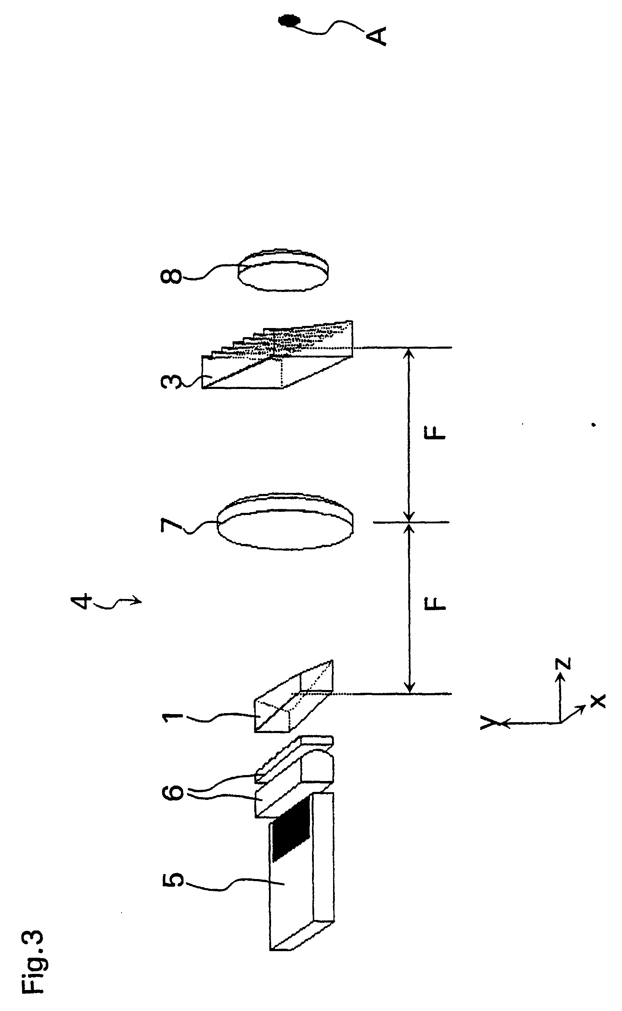

Figur 2 zeigt in derselben Darstellung wie Figur 1 ein Array 3 aus erfindungsgemäßen Winkeltransformationselementen, die parallel in y-Richtung nebeneinander angeordnete optisch aktive Grenzflächen 2 aufweisen. Bevorzugt ist dieses Array 3 als einstückiges Element, beispielsweise aus Quarz gefertigt.

Figur 3 zeigt in einer schematischen Darstellung eine erfindungsgemäße Strahltransformationsvorrichtung zur Transformation eines linienförmigen Eingangsstrahlbündels in ein rechteckiges Ausgangsstrahlbündel. Diese Strahltransformationsvorrichtung ist als ganzes mit dem Bezugszeichen 4 versehen.

Darin ist vor einem Laserbarren 5 mit einem in x-Richtung linienförmig-langgestreckten Strahlquerschnitt zunächst ein Kollimator 6 aus gekreuzten Zylinderlinsen-Arrays angeordnet. Davor befindet sich in Strahlrichtung, also in z-Richtung, ein erstes erfindungsgemäßes Winkeltransformationselement 1, wie in Figur 1 dargestellt.

Das Winkeltransformationselement 1 befindet sich im Fokus F einer Fourier-Transformationsanordnung 7, die in der dargestellten Ausführung eine Sammellinse ist. Sie kann jedoch gleichermaßen durch ein Array aus gekreuzten Zylinderlinsen oder dergleichen gebildet werden.

In z-Richtung hinter der Fourier-Transformationsanordnung 7 in ihrer rückwärtigen Brennebene, befindet sich als zweites Winkeltransformationselement ein Winkeltransformationselement-Array 3 gemäß Figur 2. Dahinter ist eine beliebige Fokussiereinrichtung 8 zur Fokussierung des Ausgangsstrahlbündels A angeordnet.

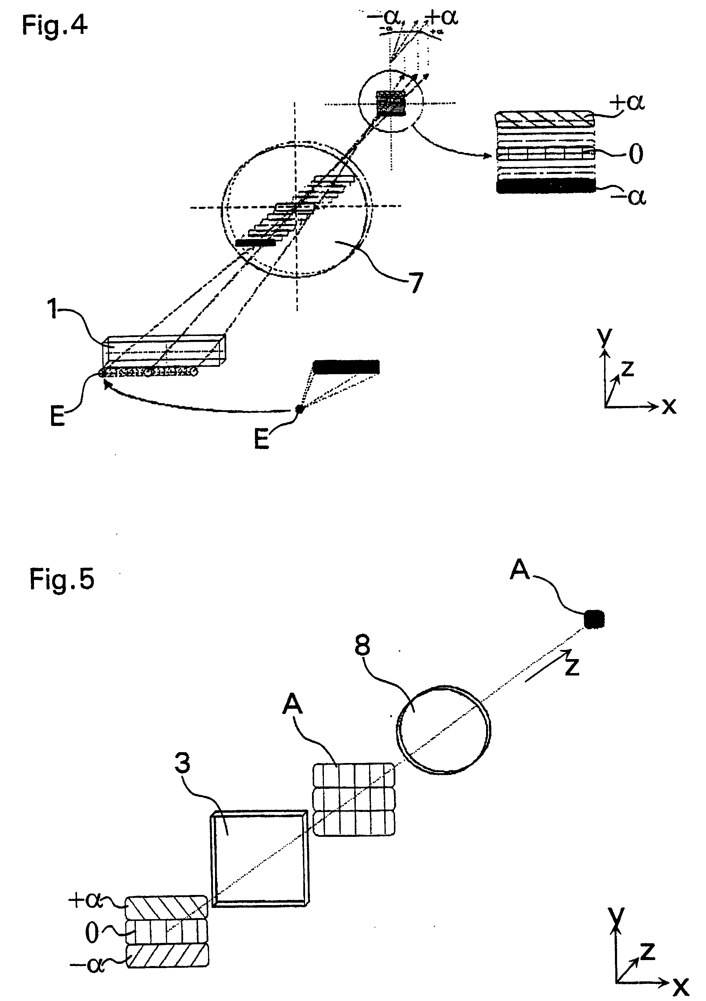

In Figur 4 ist die Funktionsweise des ersten Winkeltransformationselements 1 zusammen mit der Fourier-Transformationsanordnung 7 gemäß Figur 3 erläutert.

Das in x-Richtung langgestreckte Eingangsstrahlbündel wird aus einer unendlichen Vielzahl von in x-Richtung nebeneinander liegenden Elementarstrahlen bzw. Elementarstrahlbündeln E gebildet. Jedes dieser Bündel E hat eine gegebene Divergenzverteilung, was unten in der Zeichnung angedeutet ist. Die Divergenz in y-Richtung nach der Kollimation ist klein (fast-axis); in x-Richtung relativ dazu größer (slow-axis).

Die schematisch eingezeichneten, in Wirklichkeit infinitesimalen Elementarbündel E, die in der Darstellung links im Eingangsstrahlbündel liegen, werden durch das erfindungsgemäße Winkeltransformationselement 1 unter Beibehaltung ihrer Divergenz in der y-z-Ebene in Strahlrichtung um einen durch die lokale Neigung des Winkeltransformationselements 1 vorgegebenen Winkel nach unten abgelenkt. Entlang der x-Achse von links nach rechts werden die Elementarbündel in Abhängigkeit von ihrer x-Koordinate um kontinuierlich variierende Winkel nach oben abgelenkt. Die zunächst vorliegende räumliche Verteilung in x-Richtung wird durch das erfindungsgemäße Winkeltranformationselement 1 auf diese Weise in eine Strahlwinkel-Verteilung transformiert.

Durch die Fourier-Transformationsanordnung 7 wird das schräg liegende, kontinuierliche Strahlungsfeld zu einem rechteckigen Ausgangsstrahlquerschnitt gebündelt.

Oben rechts ist der Ausgangsstrahlquerschnitt vergrößert dargestellt. Die Intensität ist darin homogen verteilt. Mit den unterschiedlichen Schraffuren, die oben und unten entgegengesetzt schräg sind, ist die Divergenz angedeutet. Für jede y-Koordinate liegt ein konstanter Divergenzwinkel α vor, der über den Strahlungsquerschnitt von -α bis +α variiert.

In Figur 5 ist dargestellt, wie das Ausgangsstrahlbündel aus Figur 4 mit der in y-Richtung kontinuierlich von -α bis +α variierenden Divergenz durch das zweite Winkeltransformationselement 3, welches als Array ausgebildet ist, so transformiert wird, daß das Ausgangsstrahlbündel, welches mit A bezeichnet ist, nicht nur eine homogene Intensitätsverteilung aufweist, sondern auch parallel zur z-Achse ist. Das bedeutet, daß die durch die Fourier-Transformation erzeugte räumliche Divergenzverteilung mittels des erfindungsgemäßen Winkeltransformationselements 3 wiederum kompensiert wird.

Der besondere Vorteile des Ausgangsstrahlbündels A besteht darin, daß es rechteckig mit einem gleichmäßigen Seitenverhältnis ist und dabei eine homogene Intensitätsverteilung aufweist. Eine Einkopplung in den kreisrunden Faserquerschnitt einer Lichtleitfaser ist deswegen mit hoher Effizienz möglich.

Ein weiterer grundsätzlicher Vorteil einer erfindungsgemäßen Strahltransformationsvorrichtung 4 besteht darin, daß sie gegen Fehlpositionierungen der Strahlquelle 5 in x- oder y-Richtung sehr tolerant ist. Das heißt, daß eine Fehlpositionierung des Eingangsstrahlbündels E sich nur in einer kleinen Verlagerung des Ausgangsstrahlbündels A bemerkbar macht. Das bringt den wesentlichen Vorteil mit sich, daß eine Mehrzahl von Laserbarren 5 in y-Richtung gestapelt als Stack angeordnet werden können, wobei die Gesamtleistung aller emittierten Strahlbündel E praktisch in einem Ausgangsstrahlbündel A homogen zusammengefaßt wird. Damit lassen sich höchste Leistungsdichten effizient in eine Lichtleitfaser einkoppeln.

## Patentansprüche

1. Vorrichtung zur optischen Strahltransformation mindestens eines Strahlbündels, welches einen in der x-y-Ebene ausgedehnten Strahlquerschnitt hat, mit optischen Elementen, die im Strahlengang angeordnete optisch aktive Grenzflächen aufweisen, wobei mindestens ein optisches Element als kontinuierliches Winkeltransformationselement (1, 3) ausgebildet ist, welches eine optische Grenzfläche (2) aufweist, die längs der x-Achse eine kontinuierlich variierende Neigung in Strahlrichtung bezüglich der y-Achse hat, **dadurch gekennzeichnet, dass** im Strahlengang aufeinanderfolgend
- ein erstes Winkeltransformationselement (1) mit mindestens einer optischen Grenzfläche (2), welche längs der x-Achse eine kontinuierlich variierende Neigung in Strahlrichtung bezüglich der y-Achse hat,
eine Fourier-Transformationsanordnung (7),
- ein zweites Winkeltransformationselement (3) mit mindestens einer optisch aktiven Grenzfläche (2), welche längs der y-Achse eine kontinuierlich variierende Neigung in Strahlrichtung bezüglich der x-Achse hat,
angeordnet sind, wobei das erste und zweite Winkeltransformationselement (13) in der Brennebene und der rückwärtigen Brennebene der Fourier-Transformationsanordnung (7) angeordnet sind.

2. Vorrichtung nach dem Oberbegriff des Anspruchs 1, **dadurch gekennzeichnet, dass** vor dem Winkeltransformationselement (1, 3) mindestens eine als Laserbarren ausgeführte Laserquelle (5) angeordnet ist, die eine linienförmige, in x-Richtung langgestreckte Lichtaustrittsfläche hat, wobei diese Lichtaustrittsfläche und damit der Strahlquerschnitt einen gebogenen Verlauf aufweisen, und wobei der lokale Neigungswinkel des Winkeltransformationselementes (1, 3) für eine gegebene x-Koordinate jeweils abhängig ist von der lokalen Abweichung Δ y der Laserlichtquelle (5) vom linearen Verlauf.

3. Vorrichtung nach einem der Ansprüche 1 oder 2, **dadurch gekennzeichnet, dass** die mindestens eine optische Grenzfläche (2) des Winkeltransformationselements (1, 3) über dessen Erstreckung in x-Richtung einen nichtlinearen Verlauf des Neigungswinkels aufweist.

4. Vorrichtung nach einem der Ansprüche 1 oder 2, **dadurch gekennzeichnet, dass** das Winkeltransformationselement (1, 3) als refraktives Element ausgebildet ist.

5. Vorrichtung nach einem der Ansprüche 1 oder 2, **dadurch gekennzeichnet, dass** das Winkeltransformationselement (1, 3) als reflektives Element ausgebildet ist.

6. Vorrichtung nach Anspruch 1, **dadurch gekennzeichnet, dass** das Winkeltransformationselement (1, 3) als Array von parallel nebeneinander angeordneten Teil-Winkeltransformationselementen ausgebildet ist, deren optisch aktive Grenzflächen (2) jeweils längs der x-Achse eine kontinuierlich bezüglich der y-Achse variierende Neigung in Strahlrichtung aufweisen.

7. Vorrichtung nach Anspruch 5, **dadurch gekennzeichnet, dass** das Winkeltransformationselement-Array (3) einstückig ausgebildet ist.

8. Vorrichtung nach Anspruch 5, **dadurch gekennzeichnet, dass** mindestens zwei Teil-Winkeltransformationselemente eines Winkeltransformationselement-Arrays (3) relativ zueinander unterschiedliche Neigungsverläufe haben.

9. Vorrichtung nach Anspruch 1, **dadurch gekennzeichnet, dass** die Winkeltransformationselemente (1, 3) jeweils eine Mehrzahl von Einzel-Winkeltransformationselementen aufweisen.

10. Vorrichtung nach Anspruch 1, **dadurch gekennzeichnet, dass** die Fourier-Transformationsanordnung (7) eine Sammellinse aufweist.

11. Vorrichtung nach Anspruch 1, **dadurch gekennzeichnet, dass** die Fourier-Transformationsanordnung (7) ein Linsenarray aufweist.

12. Vorrichtung nach Anspruch 1, **dadurch gekennzeichnet, dass** die Fourier-Transformationsanordnung (7) gekreuzte Zylinderlinsen aufweist.

13. Vorrichtung nach Anspruch 1, **dadurch gekennzeichnet, dass** die Fourier-Transformationsanordnung (7) Zylinderlinsen-Arrays aufweist.

14. Vorrichtung nach Anspruch 1, **dadurch gekennzeichnet, dass** vor dem Winkeltransformationselement (1, 3) mindestens eine Laserquelle (5) angeordnet ist.

15. Vorrichtung nach Anspruch 14, **dadurch gekennzeichnet, dass** die Laserquelle (5) mindestens ein Laserbarren ist, der eine linienförmige, in x-Richtung langgestreckte Lichtaustrittsfläche hat.

16. Vorrichtung nach Anspruch 15, **dadurch gekennzeichnet, dass** die Laserquelle (5) einen Laserbarren-Stapel aufweist, bei dem eine Mehrzahl von Laserbarren in y-Richtung parallel gestapelt ist.

17. Vorrichtung nach einem oder mehreren der Ansprüche 1 bis 16, **dadurch gekennzeichnet, dass** sie als optischer Hybridchip ausgebildet ist, bei dem die optischen Elemente (1, 3, 4, 6, 7, 8) auf einer einstückigen Grundplatte unlösbar lagefixiert sind.

18. Vorrichtung nach Anspruch 17, **dadurch gekennzeichnet, dass** in die Grundplatte Halterungen zur Aufnahme der optischen Elemente (1, 3, 4, 6, 7, 8) maßhaltig eingeformt sind.

19. Verfahren zur Transformation des Strahlquerschnitts mindestens eines Strahlbündels von Elementarstrahlen (E), welches einen in der x-y-Ebene zumindest in x-Richtung ausgedehnten Strahlquerschnitt hat und eine definierte Divergenzverteilung aufweist, **dadurch gekennzeichnet,**
- **dass** in x-Richtung benachbarte Elementarstrahlen (E) unter Beibehaltung ihrer Divergenz um einen kontinuierlich mit der x-Koordinate variierenden Strahlwinkel in y-Richtung relativ zur Strahlachse abgelenkt werden,
- **dass** danach durch eine kontinuierliche Fouriertransformation die Elementarstrahlen (E) in Abhängigkeit von ihrer jeweiligen Divergenz in eine y-Koordinate transformiert werden, und
- **dass** auschließend die in Abhängigkeit von der y-Koordinate in ihrer Divergenz kontinuierlich variierenden Elementarstrahlen (E) bezüglich der Strahlachse parallelisiert werden.

## Claims

1. Device for optical ray transformation of at least one pencil of rays, which has a ray cross section extended in the x-y-plane, with optical elements, that show the optically active interfaces arranged in the course of rays, in which at least one optical element is formed as a continuous angle transformation element (1, 3), which shows an optical interface (2), that has a continuously varying tilt along the x-axis in the ray direction with regard to the y-axis, **characterized in that** in the course of rays consecutively are arranged
- a first angle transformation element (1) with at least one optical interface (2), which along the x-axis has a continuously varying tilt in the ray direction with regard to the y-axis,
one Fourier-transformation arrangement (7),
- a second angle transformation element (3) with at least one optically active interface (2), which along the y-axis has a continuously varying tilt in the ray direction with regard to the x-axis,
in which the first and second angle transformation elements (13) are arranged in the focal plane and the rearward focal plane of the Fourier-transformation arrangement (7).

2. Device according to the preamble of claim 1, **characterized in that**, in front of the angle transformation element (1, 3) is arranged at least one laser source (5) executed as laser dividers, that has a line-shaped light outlet surface extended in x-direction, in which this light outlet surface, and with it, the ray cross section show a bent course, and in which the local inclination angle of the angle transformation element (1, 3) for a given x- coordinate in each case depends on the laser light source (5) local deviation-y from the linear course.

3. Device according to one of claims 1 or 2, **characterized in that**, at least one optical interface (2) of the angle transformation element (1, 3) shows a non linear course of the angle inclination over its extension in the x-direction.

4. Device according to one of the claims 1 or 2, **characterized in that**, the angle transformation element (1, 3) is formed as an active refractive element.

5. Device according to one of the claims 1 or 2, **characterized in that**, the angle transformation element (1, 3) is formed as a reflective element.

6. Device according to claim 1, **characterized in that** the angle transformation element (1, 3) is formed as an array by parallelly arranged side-by-side partial-angle transformation elements, whose optically active interfaces (2) in each case along the x-axis show a continuously varying tilt with regard to the y-axis in the ray direction.

7. Device according to claim 5, **characterized in that** the angle transformation element array (3) is formed by one-piece.

8. Device according to claim 5, **characterized in that** at least two partial angle transformation elements of an angle transformation element array (3) have relatively different tilt gradients one towards the other.

9. Device according to claim 1, **characterized in that** the angle transformation elements (1, 3) in each case show a multitude of single-angle transformation elements.

10. Device according to claim 1, **characterized in that** the Fourier-transformation arrangement (7) shows a collective lens.

11. Device according to claim 1, **characterized in that** the Fourier-transformation arrangement (7) shows a lens array.

12. Device according to claim 1, **characterized in that** the Fourier-transformation arrangement (7) shows crossed cylinder lenses.

13. Device according to claim 1, **characterized in that** the Fourier-transformation arrangement (7) shows cylinder lens arrays.

14. Device according to claim 1, **characterized in that** in front of the angle transformation element (1, 3) at least one laser source (5) is arranged.

15. Device according to claim 14, **characterized in that** the laser source (5) is at least a laser divider, that has a line-shaped light outlet surface extended in the x-direction.

16. Device according to claim 15, **characterized in that** the laser source (5) shows a laser divider stack, in the case where a multitude of laser dividers are parallelly stacked in the y-direction.

17. Device according to one or several claims 1 to 16, **characterized in that** it is formed as an optical hybrid chip, in the case where the optical elements (1, 3, 4, 6, 7, 8) are fixed in an undetachable position on a one-piece bedplate.

18. Device according to claim 17, **characterized in that** supports are built into the bedplate in order to house the optical elements (1, 3, 4, 6, 7, 8) following the measures.

19. Processes for ray cross section transformation of at least one pencil of rays of elementary rays (E), which has a ray cross section extended in the x-y-plane at least in the x-direction and shows a defined divergence distribution, **characterized in that**,
- in the x-direction neighbouring elementary rays (E) maintaining their divergence around a continuously varying ray angle with the x coordinate in y-direction are diverted relatively to the ray axis,
- after that through a continuous Fourier-transformation the elementary rays (E) are transformed into y-coordinates in dependence of their respective divergence, and
- that afterwards the continuously varying elementary rays (E) are parallelized in their divergence in dependence of y-coordinates in regard to the ray axis.

## Revendications

1. Dispositif pour la transformation des rayons optiques au moins d'un faisceau de rayons, lequel a une section transversale de rayons étendus dans le plan de x-y, avec des éléments optiques, qui présente des surfaces limitrophes optiquement actives disposées en suivant la direction des rayons actifs, tandis qu'au moins un élément optique est composé d'un élément de transformation des angles continus (1, 3), lequel présente une surface limitrophe optique (2), qui le long de l'axe x a une inclinaison variant de façon continue en suivant la direction de rayon par rapport à l'axe y **caractérisé en ce qu'**en suivant la direction des rayons de façon consécutive sont disposés:
• un premier élément de transformation des angles (1) avec au moins une surface limitrophe optique (2), laquelle le long de l'axe x a une inclinaison variant de façon continue en suivant la direction du rayon par rapport à l'axe y,
une disposition de transformation Fourier (7),
• un second élément de transformation des angles (3) avec au moins une surface limitrophe optiquement active (2), laquelle le long de l'axe y a une inclinaison variant de façon continue suivant la direction des rayons par rapport à l'axe x, tandis que le premier et second élément de transformation des angles (13) sont disposés dans le plan focale et le plan focale postérieur de la disposition de la transformation Fourier (7).

2. Dispositif selon le terme générique de la revendication 1, **caractérisé en ce que,** devant l'élément de transformation des angles (1, 3) est disposée au moins une source de laser (5) qui agit comme rayons laser, qui a une surface de sortie de lumière étendue linéaire, suivant la direction x, tandis que cette surface de sortie de lumière ainsi que la section transversale du rayon présentent un déroulement fléchi, et tandis que l'angle d'inclinaison local de l'élément de transformation des angles (1, 3) pour une coordonnée de x donnée est toujours dépendant de la déviation locale Δ de la source de lumière de lasers (5) du déroulement linéaire.

3. Dispositif selon une des revendications 1 ou 2, **caractérisé en ce qu'**au moins une surface limitrophe optique (2) de l'élément de transformation des angles (1,3) au-delà de son extension suivant la direction de x présente un déroulement non linéaire de l'angle d'inclinaison.

4. Dispositif selon une des revendications 1 ou 2, **caractérisé en ce que** l'élément de transformation des angles (1, 3) est formé d'un élément réfracteur.

5. Dispositif selon une des revendications 1 ou 2, **caractérisé en ce que** l'élément de transformation des angles (1, 3) est formé d'un élément réflecteur.

6. Dispositif selon la revendication 1, **caractérisé en ce que** l'élément de transformation des angles (1, 3) est composé d'un ensemble d'éléments partiels de transformation des angles disposés les uns à côté des autres de manière parallèle, leurs surfaces limites optiquement actives (2) le long de l'axe x présentent toujours de façon continue une inclinaison variant par rapport à l'axe y en suivant la direction du rayon.

7. Dispositif selon la revendication 5 **caractérisé en ce que** l'ensemble des éléments de transformation des angles (3) est formé d'une pièce.

8. Dispositif selon la revendication 5 **caractérisé en ce qu'**au moins deux éléments partiels de transformation des angles d'un ensemble d'éléments de transformation des angles (3) ont des déroulements d'inclinaison différents les uns par rapport aux autres.

9. Dispositif selon la revendication 1, **caractérisé en ce que** les éléments de transformation des angles (1,3) présentent toujours une majorité d'éléments individuels de transformation des angles.

10. Dispositif selon la revendication 1, **caractérisé en ce que** la disposition de la transformation Fourier (7) présente une lentille collectrice.

11. Dispositif selon la revendication 1, **caractérisé en ce que** la disposition de transformation Fourier (7) présente un ensemble de lentilles.

12. Dispositif selon la revendication 1, **caractérisé en ce que** la disposition de transformation Fourier (7) présente des lentilles cylindriques croisées.

13. Dispositif selon la revendication 1, **caractérisé en ce que** la disposition de transformation Fourier (7) présente un ensemble de lentilles cylindriques.

14. Dispositif selon la revendication 1, **caractérisé en ce que** devant l'élément de transformation des angles (1, 3) est disposée au moins une source de laser (5).

15. Dispositif selon la revendication 14, **caractérisé en ce que** la source de laser (5) a au moins un rayon laser, qui a une surface de sortie de lumière linéaire, suivant la direction de x.

16. Dispositif selon la revendication 15, **caractérisé en ce que** la source de laser (5) présente de nombreux rayons laser, dans laquelle la majorité des rayons laser sont superposés parallèlement dans la direction de y.

17. Dispositif selon une ou plusieurs revendications de 1 jusqu'à 16, **caractérisé en ce qu'**il est composé d'une puce hybride optique, dans laquelle les éléments optiques (1, 3, 4, 6, 7, 8) sont fixés dans une position non détachable sur une plaque de base d'une seule pièce.

18. Dispositif selon la revendication 17, **caractérisé en ce que** dans la plaque de base sont formés des supports pour la réception des éléments optiques (1, 3, 4, 6, 7, 8) avec des dimensions exactes.

19. Procédés pour la transformation de la section transversale des rayons d'au moins un faisceau de rayons des rayons élémentaires (E), lesquels présentent une section transversale de rayons étendus dans le plan de x-y du moins en suivant la direction de x et une distribution définie de divergence, **caractérisé en ce que,**
• des rayons élémentaires contigus (E) suivant la direction de x, en maintenant leur divergence autour d'un angle de rayon variant de façon continue avec la coordonnée de x, sont déviés relativement dans la direction de y par rapport à l'axe de rayon,
• les rayons élémentaires (E) sont ensuite transformés dans une coordonnée de y par une transformation Fourier de façon continue selon leurs divergences respectives, et
• les rayons élémentaires (E) variant de façon continue selon leurs divergences respectives en dépendant des coordonnés y sont ensuite placés parallèlement à l'axe des rayons.
